# EUROPEAN PATENT APPLICATION

(11) **EP 1 795 341 A1**
(43) Date of publication of application: **13.06.2007**
(21) Application number: 05787514.8
(22) Date of filing: 29.09.2005
(51) Int. Cl.: B32B 25/08, B32B 25/14, C08J 3/24, C08L 13/00

(54) **LAYERED RUBBER PRODUCT**

(30) Priority: 29.09.2004 JP 2004284188
(71) Applicant: ZEON CORPORATION, Tokyo 100-8246 (JP)
(72) Inventor: ODAGAWA, Yoshiyuki c/o ZEON CORPORATION, Chiyoda-ku, Tokyo 1008246 (JP); NUMATA, Hiromi c/o ZEON CORPORATION, Chiyoda-ku, Tokyo 1008246 (JP); FUJITA, Haruhiko c/o ZEON CORPORATION, Chiyoda-ku, Tokyo 1008246 (JP)
(74) Representative: Albrecht, Thomas
(86) International application number: PCT/JP2005/017989
(87) International publication number: WO 2006/035892

(57) **Abstract**

A rubber laminate comprised of a cross-linked rubber layer containing a carboxyl-group containing nitrile copolymer rubber (A), a carboxyl-group containing acryl-based polymer (B), and a specific phosphonium salt and a fluorine-based polymer layer. Preferably, the carboxyl-group content per 100 grams of the (A) ingredient is 2×10⁻³ to 1×10⁻¹ equivalents and the carboxyl-group content per 100 grams of the (B) ingredient is 4×10⁻⁴ to 1×10⁻¹ equivalents, the (A) ingredient and (B) ingredient are in a weight ratio of 40:60 to 90:10, and the phosphonium salt content in the cross-linked rubber layer is 0.5 to 10 parts by weight per 100 parts by weight of the total of the (A) ingredient and (B) ingredient. According to the present invention, there is provided a rubber laminate excellent in oil resistance and gasoline permeation resistance plus tensile strength, low compression set, and other mechanical characteristics, ozone resistance, and interlayer adhesion.

## Description

### TECHNICAL FIELD

The present invention relates to a rubber laminate comprised of a cross-linked rubber layer containing a nitrile copolymer rubber and acryl-based polymer and a fluorine-based polymer layer, more particularly relates to a rubber laminate excellent in oil resistance and ozone resistance and able to be suitably used as a rubber part of an automobile etc.

### BACKGROUND ART

An acrylonitrile butadiene rubber (NBR) or other nitrile copolymer rubber is known as a rubber excellent in oil resistance. However, a nitrile copolymer rubber is insufficient in ozone resistance or other weather resistance, so to improve on this, a so-called "polyblend" blending a vinyl chloride resin into this to improve the ozone resistance has been used up to now. However, a polyblend is excellent in oil resistance and ozone resistance, but when discarding it, there was the problem of environmental pollution by the halogens.
To solve this problem, attempts have been made to blend a nitrile copolymer rubber and acryl-based polymer, but nothing has been obtained with an excellent balance of oil resistance, ozone resistance, and mechanical characteristics.

Further, Patent Document 1 proposes a fuel hose comprised of a laminate of an acryl-based polymer layer containing acrylonitrile monomer units and a fluororesin layer excellent in gasoline permeation resistance, but this laminate was insufficient in bonding strength between the two layers.
Patent Document 1 : Japanese Patent Publication (A) No. 2004-150457

### DISCLOSURE OF THE INVENTION

### PROBLEM TO BE SOLVED BY THE INVENTION

An object of the present invention is to provide a rubber laminate excellent in oil resistance and gasoline permeation resistance and also tensile strength, low compression set, or other mechanical characteristics, ozone resistance, and interlayer adhesion.

### MEANS FOR SOLVING THE PROBLEMS

The present inventors engaged in intensive studies to achieve the above object and as a result discovered that a rubber laminate comprised of a cross-linked rubber layer containing a carboxyl-group containing nitrile copolymer rubber and a carboxyl-group containing acryl-based polymer and specific phosphonium salt and a fluorine-based polymer layer is excellent in oil resistance and gasoline permeation resistance plus tensile strength, low compression set, and other mechanical characteristics, ozone resistance, and interlayer adhesion and thereby completed the present invention.

Therefore, according to the present invention, the following 1 to 7 are provided.
1. A rubber laminate comprised of a cross-linked rubber layer containing a carboxyl-group containing nitrile copolymer rubber (A), a carboxyl-group containing acryl-based polymer (B), and a phosphonium salt shown by the following general formula (1) and a fluorine-based polymer layer. 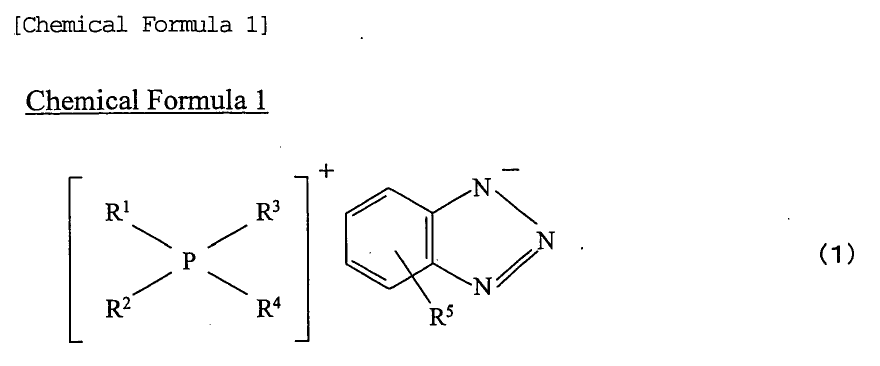 (where R¹, R², R³, and R⁴ are C₁ to C₂₀ hydrocarbon residues which may contain substituent groups. However, up to three of R¹, R², R³, and R⁴ may be primary to tertiary amino groups or fluoroalkyl groups. R⁵ is hydrogen or a C₁ to C₂₀ alkyl group)
2. The rubber laminate as set forth in 1, wherein the carboxyl-group content per 100 grams of the carboxyl-group containing nitrile copolymer rubber (A) ingredient is 2×10⁻³ to 1×10⁻¹ equivalents and the carboxyl-group content per 100 grams of the carboxyl-group containing acryl-based polymer (B) ingredient is 4×10⁻⁴ to 1×10⁻¹ equivalents.
3. The rubber laminate as set forth in 1 or 2, wherein the carboxyl-group containing nitrile copolymer rubber (A) ingredient and the carboxyl-group containing acryl-based polymer (B) ingredient are in a weight ratio of (A) ingredient: (B) ingredient=40:60 to 90:10.
4. The rubber laminate as set forth in any one of 1 to 3, wherein the phosphonium salt content in the cross-linked rubber layer is 0.5 to 10 parts by weight per 100 parts by weight of the total of the carboxyl-group containing nitrile copolymer rubber (A) ingredient and the carboxyl-group containing acryl-based polymer (B) ingredient.
5. The rubber laminate as set forth in any one of 1 to 4, wherein the phosphonium salt is also contained in the fluorine-based polymer layer.
6. The rubber laminate as set forth in any one of 1 to 5, wherein the fluorine-based polymer layer is comprised of a polymer containing fluorine-containing unsaturated monomer units in an amount of 62 wt% or more and the polymer is comprised of a fluorine rubber having a Mooney viscosity ML₁₊₁₀ (121°C) of 1 to 150.
7. The rubber laminate as set forth in any one of 1 to 5, wherein the fluorine-based polymer layer is comprised of a polymer containing fluorine-containing unsaturated monomer units in an amount of 62 wt% or more and the polymer is comprised of a fluororesin having a melt flow index at 265°C and a load of 5 kg based on JIS K 7210 of 5 to 60 g/10 min.

### EFFECTS OF THE INVENTION

According to the present invention, there is provided a rubber laminate excellent in oil resistance and gasoline permeation resistance plus tensile strength, low compression set, and other mechanical characteristics, ozone resistance, and interlayer adhesion.

### BEST MODE FOR CARRYING OUT THE INVENTION

The rubber laminate of the present invention is a rubber laminate comprised of a cross-linked rubber layer containing a carboxyl-group containing nitrile copolymer rubber (A), carboxyl-group containing acryl-based polymer (B), and a phosphonium salt shown in the above general formula (1) and a fluorine-based polymer layer.
In the present invention, preferably the carboxyl-group content per 100 grams of the (A) ingredient is 2×10⁻³ to 1x10⁻¹ equivalents and the carboxyl-group content per 100 grams of the (B) ingredient is 4×10⁻⁴ to 1×10⁻¹ equivalents. Preferably, the (A) ingredient and (B) ingredient have a weight ratio of 40:60 to 90:10. Preferably, the phosphonium salt content in the cross-linked rubber layer is 0.5 to 10 parts by weight per 100 parts by weight of the total of the (A) ingredient and (B) ingredient.
Here, the cross-linked rubber layer is a layer comprised of a mixed rubber composition containing the carboxyl-group containing nitrile copolymer rubber (A), the carboxyl-group containing acryl-based polymer (B), and the above-mentioned phosphonium salt cross-linked by a cross-linking agent able to cross-link the carboxyl groups of the (A) ingredient and (B) ingredient.

### Cross-linked Rubber Layer (Mixed Rubber Composition)

### Carboxyl-Group Containing Nitrile Copolymer Rubber (A)

The carboxyl-group containing nitrile copolymer rubber (A) used in the present invention is a polymer obtained by copolymerization of an α,β-ethylenic unsaturated nitrile, conjugated diene, carboxyl-group containing monomer, and monomer added as needed and able to copolymerize with these.

The ratio of α,β-ethylenic unsaturated nitrile units in the carboxyl-group containing nitrile copolymer rubber (A) is preferably 10 to 70 wt%, more preferably 20 to 60 wt%, particularly preferably 25 to 55 wt%.
The ratio of the conjugated diene units is preferably 20 to 80 wt%, more preferably 30 to 70 wt%, particularly preferably 35 to 65 wt%.
The ratio of the carboxyl-group containing monomer units is made one whereby the content of carboxyl groups in the carboxyl-group containing nitrile copolymer rubber (A) due to introduction of carboxyl-group containing monomer units is, per 100 g of the (A) ingredient, preferably 2×10⁻³ to 1×10⁻¹ equivalents, more preferably 4×10⁻³ to 5×10⁻² equivalents, particularly preferably 6×10⁻³ to 3×10⁻² equivalents in range.
The ratio of the other monomer units copolymerized with these monomers in accordance with need is 0 to 30 wt% in range.

If α,β-ethylenic unsaturated nitrile units are too small in content, the cross-linked rubber is liable to be inferior in oil resistance, while if conversely too great, the cold resistance may drop. Further, if the carboxyl-group content is too small, sufficient cross-linking becomes difficult and the cross-linked rubber is liable to fall in mechanical strength, while if conversely too great, the scorching of mixed rubber composition may become faster and the cross-linked rubber may fall in elongation. The monomers of the above group may be used alone or in combinations of two or more types.

The α,β-ethylenic unsaturated nitrile is not limited so long as it is an α,β-ethylenic unsaturated compound containing nitrile groups, but a C₃ to C₁₈ one is preferably used. As examples of such a compound, acrylonitrile, methacrylonitrile, α-chloroacrylonitrile, etc. may be mentioned. Among these, acrylonitrile is preferable.

The conjugated diene is not limited so longer as it is a conjugated diene able to copolymerize with the α,β-ethylenic unsaturated nitrile, but a C₉ to C₁₂ aliphatic conjugated diene compound is preferably used. As examples of such a compound, 1,3-butadiene, a halogen substituted 1,3-butadiene, 1,3-pentadiene, isoprene, 2,3-dimethyl-1,3-butadiene, 1,3-pentadiene, etc. may be mentioned. Among these, 1,3-butadiene is preferable.

The carboxyl-group containing monomer is not limited so long as it is a monomer able to copolymerize with the α,β-ethylenic unsaturated nitrile and conjugated diene, but an α,β-ethylenic unsaturated monocarboxylic acid, α,β-ethylenic unsaturated dicarboxylic acid, and α,β-ethylenic unsaturated dicarboxylic acid monoester are preferably illustrated.

As the α,β-ethylenic unsaturated monocarboxylic acid, α,β-ethylenic unsaturated compounds having one carboxyl group may be mentioned. A C₃ to C₁₂ acrylic acid, methacrylic acid, ethyl acrylic acid, crotonic acid, cinnamic acid, etc. are preferably illustrated.
As the α,β-ethylenic unsaturated dicarboxylic acid, α,β-ethylenic unsaturated compounds having two carboxyl groups may be mentioned. C₄ to C₁₂ fumaric acid, maleic acid, or other butene dionic acids; itaconic acid, citraconic acid, chloromaleic acid, etc. are preferably illustrated. Further, anhydrides of these α,β-ethylenic unsaturated dicarboxylic acids may also be illustrated.
As the α,β-ethylenic unsaturated dicarboxylic acid monoester, monoesters of C₃ to C₁₁ α,β-ethylenic unsaturated dicarboxylic acids and C₁ to C₈ alkanols are preferable. Monomethyl fumarate, monoethyl fumarate, mono-n-butyl fumarate, monomethyl maleate, monoethyl maleate, mono-n-butyl maleate, or other butene dionic acid mono chain alkyl esters; monocyclopentyl fumarate, monocyclohexyl fumarate, monocyclohexenyl fumarate, monocyclopentyl maleate, monocyclohexyl maleate, monocyclohexenyl maleate, or other butene dionic acid monoesters having alicyclic structures; monomethyl itaconate, monoethyl itaconate, mono-n-butyl itaconate, or other itaconicacid monoesters; mono-2-hydroxyethyl citraconate or other citraconic acid monoesters; etc. may be illustrated.

Among these, α,β-ethylenic unsaturated dicarboxylic acid monoesters are preferable, butene dionic acid chain alkyl monoesters, butene dionic acid monoesters having alicyclic structures, and itaconic acid monoesters are more preferable, and mono-n-butyl fumarate, mono-n-butyl maleate, mono-n-butyl itaconate, monocyclohexyl fumarate, and monocyclohexyl maleate are particularly preferred.
Carboxyl-group containing monomers also include monomers where the carboxyl groups of these monomers form carboxylic acid salts.

As the monomers added in accordance with need and enabling coplymerizing, unconjugated dienes, α-olefins, aromatic vinyls, α,β-ethylenic unsaturated monocarboxylic acid esters, copolymerizable antiaging agents, etc. may be mentioned.

As the unconjugated dienes, C₅ to C₁₂ unconjugated dienes are preferably mentioned. 1,4-pentadiene, 1,4-hexadiene, vinylnorbornene, dicyclopentadiene, etc. may be illustrated.
As the α-olefins, C₂ to C₁₂ chain monoolefins having double bonds between the carbons of the ends and the carbons adjoining the same are preferable. Ethylene, propylene, 1-butene, 4-methyl-1-pentene, 1-hexene, 1-octene, etc. may be illustrated.
As the aromatic vinyls, styrene and C₈ to C₁₈ styrene derivatives are preferable. As examples of the derivatives, α-methyl styrene, 2-methyl styrene, 4-methyl styrene, 2,4-diethyl styrene, 4-butoxy styrene, N,N-dimethylamino styrene etc. may be mentioned.
As the α,β-ethylenic unsaturated monocarboxylic acid esters, esters of α,β-ethylenic unsaturated monocarboxylic acids and C₁ to C₁₂ aliphatic alkanols are preferable. There are ones having substituent groups. As examples of such compounds, methyl (meth)acrylate [meaning methyl acrylate and/or methyl methacrylate. Below, same for butyl (meth)acrylate etc.], butyl (meth) acrylate, methoxyethyl (meth) acrylate, trifluoroethyl (meth)acrylate, 2-hydroxypropyl (meth)acrylate, tetrafluoropropyl (meth)acrylate, etc. may be mentioned.
As the copolymerizable antiaging agent, N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline etc. may be illustrated.

To copolymerize these α,β-ethylenic unsaturated nitriles, conjugated dienes, carboxyl-group containing monomers, and copolymerizable monomers added as needed so as to obtain a carboxyl-group containing nitrile copolymer rubber (A), the known emulsion polymerization method or solution polymerization method may be used.

The carboxyl-group containing nitrile copolymer rubber (A) has a Mooney viscosity ML₁₊₄ (100°C) of preferably 10 to 150, more preferably 20 to 120, particularly preferably 30 to 100. If the Mooney viscosity is too small, the cross-linked rubber is liable to fall in mechanical strength, while conversely if too large, the mixed rubber composition may become inferior in moldability.

### Carboxyl-Group Containing Acryl-Based Polymer (B)

The carboxyl-group containing acryl-based polymer (B) used in the present invention is a polymer obtained by copolymerization of a (meth)acrylate ester, carboxyl-group containing monomer, and monomer added as necessary and able to copolymerize with these.
The ratio of the monomer units in the copolymer is not particularly limited.

As the (meth)acrylate esters, (meth)acrylic acid alkyl esters, (meth)acrylic acid alkoxyalkyl esters, etc. may be mentioned.

As the (meth) acrylic acid alkyl esters, esters of C₁ to C₈ alkanols and (meth) acrylic acid are preferable. Methyl (meth) acrylate, ethyl (meth)acrylate, n-propyl (meth)acrylate, n-butyl (meth)acrylate, isopropyl (meth) acrylate, isobutyl (meth) acrylate, n-hexyl (meth)acrylate, 2-ethylhexyl (meth)acrylate, cyclohexyl (meth)acrylate, etc. may be mentioned.
Among these, ethyl (meth)acrylate and n-butyl (meth)acrylate are preferable.

As the (meth) acrylic alkoxyalkyl esters, esters of C₂ to C₈ alkoxyalkanols and (meth)acrylic acid are preferable. Methoxymethyl (meth)acrylate, ethoxymethyl (meth)acrylate, 2-ethoxyethyl (meth)acrylate, 2-butoxyethyl (meth)acrylate, 2-methoxyethyl (meth)acrylate, 2-propoxyethyl (meth)acrylate, 3-methoxypropyl (meth) acrylate, 4-methoxybutyl (meth) acrylate, etc. may be mentioned.
Among these, 2-ethoxyethyl (meth)acrylate and 2-methoxyethyl (meth)acrylate are preferable. Particularly, 2-ethoxyethyl acrylate and 2-methoxyethyl acrylate are preferable.

As the carboxyl-group containing monomer in the component monomers of the carboxyl-group containing acryl-based polymer (B), monomers similar to the carboxyl-group containing monomers in the component monomers of above-mentioned carboxyl-group containing nitrile copolymer rubber (A) may be used. In the carboxyl-group containing acryl-based polymer (B), in particular α,β-ethylenic unsaturated dicarboxylic acid monoesters are preferable. Butene dionic acid mono chain alkyl esters, butene dionic acid monoesters having alicyclic structures, and itaconic acid monoesters are more preferable, while mono-n-butyl itaconate, mono-n-butyl fumarate, mono-n-butyl maleate, monocyclohexyl fumarate, and monocyclohexyl maleate are particularly preferred.
The content of the carboxyl groups in the carboxyl-group containing acryl-based polymer (B) due to introduction of the carboxyl-group containing monomer units is, per 100 g of (B) ingredient, preferably 4×10⁻⁴ to 1×10⁻¹ equivalents, more preferably 1×10⁻³ to 4×10⁻² equivalents, particularly preferably 5×10⁻³ to 2×10⁻² equivalents.

Further, the ratio of the carboxyl-group content per unit weight of the (B) ingredient with respect to the carboxyl-group content per unit weight of the (A) ingredient is preferably 0.2 to 1 equivalent, more preferably 0.3 to 1 equivalent, particularly preferably 0.4 to 1 equivalent. If this ratio is too small or too large, the (A) ingredient and the (B) ingredient will not sufficiently co-cross-link and the cross-linked rubber is liable to be insufficient in mechanical strength.

As the copolymerizable monomer added as needed in the monomers forming the carboxyl-group containing acryl-based polymer (B), the group of monomers illustrated as the copolymerizable monomer added as needed in the component monomers of the carboxyl-group containing nitrile copolymer rubber (A) minus the (meth)acrylic acid esters in the α,β-ethylenic unsaturated monocarboxylic acid esters and plus α,β-ethylenic unsaturated nitrile may be mentioned. α,β-ethylenic unsaturated nitrile is similar to the α,β-ethylenic unsaturated nitrile listed as a component monomer of the carboxyl-group containing nitrile copolymer rubber (A) .
When using α,β-ethylenic unsaturated nitrile as copolymerizable monomer added as needed, the unit content of the α,β-ethylenic unsaturated nitrile monomer in the carboxyl-group containing acryl-based polymer (B) is preferably 0 to 40 wt%, more preferably 2 to 30 wt%, particularly preferably 3 to 20 wt%.

To copolymerize these (meth)acrylic acid esters, carboxyl-group containing monomers, and copolymerizable monomers added as needed to obtain a carboxyl-group containing acryl-based polymer (B), the known emulsion polymerization method may be used.

The acryl-based polymer (B) has a Mooney viscosity ML₁₊₄ (100°C) of preferably 10 to 150, more preferably 20 to 80, particularly preferably 30 to 70. If the Mooney viscosity is too small, the mixed rubber composition is liable to drop in moldability and the cross-linked rubber is liable to drop in mechanical strength, but if too large, the mixed rubber composition may become inferior in moldability.

In the present invention, the carboxyl-group containing nitrile copolymer rubber (A) and the carboxyl-group containing acryl-based polymer (B) are used mixed in a weight ratio ((A) ingredient: (B) ingredient) of preferably 40:60 to 90:10, more preferably 45:55 to 80:20, particularly preferably 50:50 to 75:25. If the ratio of mixture of the carboxyl-group containing acryl-based polymer (B) is too small, the cross-linked rubber is liable to drop in ozone resistance, while if conversely too great, it may become inferior in oil resistance and mechanical strength.

### Phosphonium Salt

In the present invention, the mixed rubber composition comprised of the carboxyl-group containing nitrile copolymer rubber (A) and carboxyl-group containing acryl-based polymer (B) mixed together must contain a phosphonium salt shown by the general formula (1). The phosphonium salt is preferably uniformly mixed into the mixed rubber composition. By having the mixed rubber composition contain the phosphonium salt, the rubber laminate of the present invention comprised of the cross-linked rubber layer comprised of the mixed rubber composition cross-linked and a layer of the later mentioned fluorine-based polymer stacked together can be made larger in bonding strength at the stacking interface.

As the hydrocarbon residue forming the R¹, R², R³, and R⁴, methyl, ethyl, butyl, ethylhexyl, dodecyl, or another alkyl group; cyclohexyl or other cyclo alkyl group; benzyl, methylbenzyl, or another arakyl group, phenyl, naphthyl, butylphenyl, or other aryl group or substituted aryl group etc. may be illustrated.
As the primary to tertiary amino groups, methyl amino, ethyl amino, anilino, dimethyl amino, diethyl amino, etc. may be illustrated.
As the fluoroalkyl group, trifluoromethyl, tetrafluoropropyl, octafluoropentyl, etc. may be illustrated.
As R⁵, methyl, ethyl, butyl, ethylhexyl, dodecyl, or another alkyl group may be illustrated.
Note that the primary to tertiary amino group is a hydrocarbon residue having an amino group.

As specific examples of such a phosphonium salt, tetrabutyl phosphonium benzotriazolate, tetrabutyl phosphonium tolyl triazolate and, below, indicating only the tetrabutyl-replaced parts of the two, tetraoctyl-, methyl trioctyl-, butyl trioctyl-, phenyl tributyl-, benzyl tributyl-, benzyl tricyclohexyl-, benzyl trioctyl-, butyl triphenyl-, octyl triphenyl-, benzyl triphenyl-, tetraphenyl-, diphenyl di(diethylamino)-, phenylbenzyl di(dimethylamino)-, phenylbenzyl di(diethylamino)-, trifluoromethylbenzyl-, tetrafluoropropyl-, etc. may be mentioned.

The phosphonium salt content of the mixed rubber composition is, per 100 parts by weight of the total of the (A) ingredient and (B) ingredient, preferably 0.5 to 10 parts by weight, more preferably 1 to 8 parts by weight, particularly preferably 2 to 6 parts by weight. If the content of the phosphonium salt is too small, the interlayer bonding strength between the cross-linked rubber layer and later explained fluorine-based polymer is liable to become insufficient, while conversely if too large, the scorching of cross-linkable rubber composition may become much faster. Further, by including the phosphonium salt in the later explained fluorine-based polymer layer in an amount of preferably 0.5 to 10 parts by weight, more preferably 1 to 8 parts by weight, simultaneously with including it in the mixed rubber composition, a stronger bonding strength can be obtained.

### Cross-Linking Agent

The cross-linking agent for cross-linking the carboxyl-group containing nitrile copolymer rubber (A) and carboxyl-group containing acryl-based polymer (B) is not particularly limited so long as it is a compound which can cross-link to the carboxyl groups of both the (A) ingredient and (B) ingredient.
As this cross-linking agent, a polyvalent amine compound, polyvalent hydrazide compound, polyvalent epoxy compound, polyvalent isocyanate compound, aziridine compound, basic metal oxide, organometallic halide, etc. may be mentioned. Further, these cross-linking agents may be used together with peroxides or other cross-linking agents generally used as cross-linking agents for NBR.

As the polyvalent amine compound, C₄ to C₃₀ polyvalent amine compounds are preferable. As examples of such a polyvalent amine compound, an aliphatic polyvalent amine compound, aromatic polyvalent amine compound, etc. may be mentioned. However, a compound such as a guanidine compound having an unconjugated nitrogen-carbon double bond is not included. As the aliphatic polyvalent amine compound, hexamethylene diamine, hexamethylene diamine carbamate, N,N'-dicinnamylidene-1,6-hexane diamine, etc. may be mentioned. As the aromatic polyvalent amine compound, 4,4'-diaminodiphenyl ether, 3,4'-diaminodiphenyl ether, 4,4'-methylene dianiline, 4,4'-(m-phenylene diisopropylidene)dianiline, 4,4'-(p-phenylene diisopropylidene)dianiline, 2,2'-bis[4-(4-aminophenoxy) phenyl]propane, 4,4'-diaminobenzanilide, 4,4' -bis (4-aminophenoxy)biphenyl, m-phenylene diamine, m-xylylene diamine, p-xylylene diamine, 1,3,5-benzene triamine, etc. may be mentioned. These may be used alone as one type or together as two or more types.

The polyvalent hydrazide compound is a compound having at least two hydrazide groups. For example, isophthalic acid dihydrazide, terephthalic acid dihydrazide, phthalic acid dihydrazide, 2,6-naphthalene dicarboxylic acid dihydrazide, naphthalic acid dihydrazide, oxalic acid dihydrazide, malonic acid dihydrazide, succinic acid dihydrazide, glutaric acid dihydrazide, adipic acid dihydrazide, pimelic acid dihydrazide, suberic acid dihydrazide, azelaic acid dihydrazide, sebacic acid dihydrazide, brassylic acid dihydrazide, dodecanedioic acid dihydrazide, acetone dicarboxylic acid dihydrazide, fumaric acid dihydrazide, maleic acid dihydrazide, itaconic acid dihydrazide, trimellitic acid dihydrazide, 1,3,5-benzene tricarboxylic acid dihydrazide, aconitic acid dihydrazide, pyromellitic acid dihydrazide, etc. may be mentioned. These may be used alone as one type or together as two or more types.

As the polyvalent epoxy compound, for example, a phenol novolak type epoxy compound, cresol novolak-type epoxy compound, cresol-type epoxy compound, bisphenol A-type epoxy compound, bisphenol F-type epoxy compound, brominated bisphenol A-type epoxy compound, brominated bisphenol F-type epoxy compound, hydrogenated bisphenol A-type epoxy compound, or other glycidyl ether-type epoxy compound; alicyclic epoxy compound, glycidyl ester-type epoxy compound, glycidyl amine-type epoxy compound, isocyanulate-type epoxy compound, or other polyvalent epoxy compound; or other compound having at least two epoxy groups in its molecule may be mentioned. These may be used alone as one type or together as two or more types.

As the polyvalent isocyanate compound, C₆ to C₂₄ diisocyanates and triisocyanates are preferable. As specific examples of diisocyanates, 2,4-tolylene diisocyanate (2,4-TDI), 2,6-tolylene diisocyanate (2,6-TDI), 4,4'-diphenyl methane diisocyanate (MDI), hexamethylene diisocyanate, p-phenylene diisocyanate, m-phenylene diisocyanate, 1,5-naphthylene diisocyanate, etc. may be mentioned. Further, as specific examples of triisocyanates, 1,3,6-hexamethylene triisocyanate, 1,6,11-undecane triisocyanate, bicycloheptane triisocyanate, etc. may be mentioned. These may be used alone as one type or together as two or more types.

As the aziridine compound, tris-2, 4, 6- (1-aziridinyl) -1, 3, 5-triazine, tris[1-(2-methyl)aziridinyl]phosphenoxide, hexa[1-(2-methyl)aziridinyl]triphosphatriazine, etc. may be mentioned. These may be used alone as one type or together as two or more types.

As the basic metal oxide, zinc oxide, lead oxide, calcium oxide, magnesium oxide etc. may be mentioned. These may be used alone as one type or together as two or more types.

As the organometallic halide, a dicyclopentadienyl metal dihalide may be illustrated. As the metal, there are titanium, zirconium, hafnium, etc.

Among these cross-linking agents able to cross-link the carboxy groups of both the carboxyl-group containing nitrile copolymer rubber (A) and carboxyl-group containing acryl-based polymer (B), a polyvalent amine compound and polyvalent hydrazide compound is preferable. Further, among the polyvalent amine compounds, hexamethylene diamine carbamate and 2,2'-bis[4-(4-aminophenoxy)phenyl]propane are particularly preferred. Among the polyvalent hydrazide compounds, adipic acid dihydrazide and isophthalic acid dihydrazide are particularly preferred.
The amount of the cross-linking agent blended into the mixed rubber composition is, converted to equivalents of functional groups able to react with the carboxyl groups in the cross-linking agent, preferably 0.3 to 3 equivalents, more preferably 0.5 to 2.5 equivalents, particularly preferably 0.6 to 1.5 equivalents, with respect to the total content of the carboxyl groups of both the (A) ingredient and (B) ingredient. If the amount of the cross-linking agent blended is too small, cross-linking of the mixed rubber composition is liable to become insufficient and the cross-linked rubber is liable to drop in mechanical strength or increase in compression set, while if conversely too great, the elongation may fall.

### Other Additives

The cross-linkable mixed rubber composition may also contain, as necessary, a cross-linking accelerator, cross-linking aid, cross-linking retarder, antiaging agent, filler, reinforcing agent, plasticizer, lubricant, adhesive, lubricating agent, flame retardant, anti-mold agent, antistatic agent, coloring agent, or other additives.

The cross-linking accelerator is not limited, but a guanidine compound, imidazole compound, quaternary onium salt, polyvalent tertiary amine compound, tertiary phosphine compound, weak acid alkali metal salt, etc. is preferable.
As the guanidine compound, 1,3-diphenyl guanidine, 1,3-di-o-tolyl guanidine, etc. may be mentioned. As the imidazole compound, 2-methyl imidazole, 2-phenyl imidazole, etc. may be mentioned. As the quaternary onium salt, tetra-n-butyl ammonium bromide, octadecyl tri-n-butyl ammonium bromide, etc. may be mentioned. As the polyvalent tertiary amine compound, triethylene diamine, 1,8-diazabicyclo[5.4.0]undecene-7, etc. may be mentioned. As the tertiary phosphine compound, triphenyl phosphine, tri-p-tolyl phosphine, etc. may be mentioned. As the weak acid alkali metal salt, a sodium or potassium salt of phosphoric acid, carbonic acid, or other inorganic weak acid or a sodium or potassium salt of stearic acid, lauric acid, or another organic weak acid may be mentioned.

As the cross-linking retarder, a mono first amine compound is preferable.

As the antiaging agent, a phenol-based, amine-based, phosphoric acid-based, or other antiaging agent may be used. As a typical example of a phenol-based agent, 2,2'-methylene bis(4-methyl-6-t-butylphenol) etc. may be mentioned. As a typical example of an amine-based agent, 4,4'-bis(α,α-dimethylbenzyl)diphenylamine etc. may be mentioned.

As the filler, carbon black, silica, calcium carbonate, magnesium carbonate, talc, clay, etc. may be used. These may have a silane coupling agent etc. blended into them.

The method of preparation of the mixed rubber composition is not particularly limited. The composition may be prepared by the method of preparation of a general rubber composition. For example, the (A) ingredient, (B) ingredient, phosphonium salt, cross-linking agent, and the above optional ingredients included in accordance with need may be kneaded using an internal mixer or an open roll. When adding a cross-linking agent, cross-linking accelerator, or cross-linking aid, it is preferable after addition to mix them while adjusting the temperature to the cross-linking start temperature or less.

### Fluorine-Based Polymer Layer

The fluorine-based polymer layer which is the other layer forming the rubber laminate of the present invention with the cross-linked rubber layer formed by cross-linking the mixed rubber composition is layer comprised of a polymer containing fluorine-containing unsaturated monomer units in preferably 62 wt% or more.

The polymer is a fluorine rubber having a Mooney viscosity ML₁₊₁₀ (121°C) of preferably 1 to 150, more preferably 2 to 120.
Alternatively, the polymer is a fluororesin having a melt flow index based on JIS K 7210 at 265°C and a load of 5 kg of preferably 5 to 60 g/10 min, more preferably 9 to 50 g/10 min.

As the fluorine rubber, a polymer rubber or copolymer rubber of a fluorine-containing unsaturated monomer or a copolymer rubber of that with another monomer able to copolymerize with a fluorine-containing unsaturated monomer may be mentioned. As such a fluorine-containing unsaturated monomer, vinylidene fluoride, hexafluoropropylene, tetrafluoroethylene, pentafluoropropylene, trifluoroethylene, trifluorochloroethylene, vinyl fluoride, perfluoromethyl vinyl ether, perfluoroethyl vinyl ether, etc. may be mentioned.
As a fluorine rubber, in particular a vinylidene fluoride-hexafluoropropylene, tetrafluoroethylene-propylene, tetrafluoroethylene-perfluoromethyl vinyl ether, or other binary copolymer or a vinylidene fluoride-hexafluoropropylene-tetrafluoroethylene ternary copolymer rubber is preferable. The polymerization method of the fluorine rubber used is mainly emulsion polymerization and also suspension polymerization, solution polymerization, or another known method.

The cross-linking agent of the fluorine rubber is usually selected from the three types of a polyol-based cross-linking agent, polyamine-based cross-linking agent, and organic peroxide-based cross-linking agent.
As a polyol-based cross-linking agent, a quaternary ammonium salt or phosphine compound aid and dihydroxybenzophenone, hexafluoroisopropylidene bisphenol, or other aromatic-based diol in combination may be mentioned. As a polyamine-based cross-linking agent, hexamethylene diamine carbamate, ethylene diamine carbamate, or another diamine may be mentioned. As an organic peroxide-based cross-linking agent, benzoyl peroxide, dicumyl peroxide, etc. may be mentioned.
The fluorine rubber is mixed with a cross-linking agent to prepare a cross-linkable fluorine rubber composition for cross-linking. The method of preparation of the fluorine rubber composition is not limited. It may be performed in the same way as the preparation of the mixed rubber composition forming the cross-linked rubber layer.

A vinylidene fluoride-based rubber produces some hydrogen fluoride from the insides of the molecules not only at the time of cross-linking and forming, but also at the time of use, so a fluorine rubber composition preferably has an acid acceptor blended into it. As such an acid acceptor ingredient, magnesium oxide (MgO), calcium oxide (CaO), lead oxide (PbO), lead tetraoxide (Pb₃O₄), barium oxide (BaO), aluminum oxide (Al₂O₃), or another metal compound may be used, but in particular MgO is preferable. The amount of use of an acid acceptor comprised of a metal compound is, with respect to the fluorine rubber as 100 parts by weight, preferably 1 to 30 parts by weight.

As the fluororesin, vinylidene fluoride-tetrafluoroethylene copolymer, vinylidene fluoride-hexafluoropropylene copolymer, vinylidene fluoride-tetrafluoroethylene-hexafluoropropylene ternary copolymer, polymer of vinylidene fluoride-hexafluoropropylene copolymer on which vinylidene fluoride is grafted, polyvinylidene fluoride, ethylene-tetrafluoroethylene copolymer, etc. may be illustrated. Among these, from the viewpoint of good flexibility, vinylidene fluoride-tetrafluoroethylene copolymer, vinylidene fluoride-hexafluoropropylene copolymer, vinylidene fluoride-tetrafluoroethylene-hexafluoropropylene ternary copolymer, polymer of vinylidene fluoride-hexafluoropropylene copolymer on which vinylidene fluoride is grafted, etc. are particularly preferable. These may be used alone or in combinations of two or more types. The method of polymerization of the fluororesin is mainly emulsion polymerization, but also suspension polymerization, blow polymerization, or another known method can be used.

### Rubber Laminate

The method of production of the rubber laminate of the present invention is not particularly limited, but for example when using a fluorine-based polymer comprised of a fluorine rubber, first the cross-linkable mixed rubber composition and cross-linkable fluorine rubber composition are separately formed by pressing, rolling, extrusion, or another known method to a sheet of a thickness of preferably 0.1 to 5 mm, more preferably 0.5 to 3 mm, and any area in an uncross-linked state. Next, the two sheets are brought into contact and pressed and cross-linked for bonding using a hot press or vulcanization can. Further, the layer extrusion method may be used to form the two compositions in the uncross-linked state into laminated tubes, then a vulcanization can may be used for pressurization and cross-linking. The hot pressing is usually performed at a temperature of 140 to 200°C and a pressure of 0.2 to 15 MPa for 5 to 60 minutes. When using a vulcanization can, usually this is performed at a temperature of 130 to 160°C under a pressure of 0.18 MPa for 30 to 120 minutes.
It is possible to further heat treat the obtained laminate (postcure it) so as to shorten the cross-linking time of the cross-linking (primary cross-linking) or enable improvement of the compression set of the laminate.
Further, one or both of the mixed rubber composition and fluorine rubber composition may be formed into a sheet shape, cross-linked, then overlaid and heat and bonded under pressure using a hot press or vulcanization can under the same conditions as above.

When using a fluorine-based polymer comprised of a fluororesin, for example, first, the mixed rubber composition is processed in the same way as above to obtain an uncross-linked or cross-linked sheet. Further, separate from this, a fluororesin is formed by pressing, rolling, extrusion, or another known method to a sheet of a thickness of preferably 5 µm to 2 mm, more preferably 10 µm to 1 mm, and any area. Next, this is overlaid with the above prepared not yet cross-linked or cross-linked mixed rubber sheet and the two are heated and cross-linked for bonding using a hot press or vulcanization can under the same conditions as above.

Alternatively, regardless of whether the fluorine-based polymer is a rubber or resin, it is possible to simultaneously introduce the mixed rubber composition and fluorine-based polymer composition into a multilayer extruder or other multilayer laminate molding machine to produce the rubber laminate of the present invention.

The rubber laminate of the present invention is not limited to an embodiment in which the cross-linked rubber layer and fluorine-based polymer layer are stacked one layer at a time. So long as they are alternately stacked, one or both may be formed by a plurality of layers.

The thus obtained the rubber laminate of the present invention is excellent in tensile strength and low compression set and other mechanical characteristics and ozone resistance and also in oil resistance, gasoline permeation resistance, and interlayer adhesion. The rubber laminate of the present invention makes use of these characteristics and is useful in for example a wide range of fields such as automobiles and other transportation machinery, general machinery, and electrical machinery as for example 0-rings, gaskets, packing, oil seals, bearing seals, and other seal members; oil tubes, fuel hoses, inlet hoses, and other hoses; transmission belts, endless belts, and other industrial belts; cushioning materials and vibration absobers; conductor coverings; sheets; boots; dust covers, etc.

### EXAMPLES

Below, examples will be shown to more specifically explain the present invention. Below, "parts" and "%", unless otherwise indicated to the contrary, are based on weight. The characteristics were tested and evaluated as follows.

(1) Tensile Strength, Elongation, and Hardness
Among the ordinary state physical properties of a rubber laminate, the tensile strength and elongation were measured by preparing sheet-shaped cross-linked rubber, then punching out No. 3 Dumbbell Type test pieces, and using the same for measurement in accordance with JIS K6251 at a tensile speed of 500 mm/min.
Further, the hardness was measured in accordance with JIS K6253 at 23°C and a relative humidity of 50%.

(2) Compression Set
The rubber laminate was measured for compression set in accordance with JIS K6262. The test conditions were a compression rate of 25%, 100°C, and 22 hours.

(3) Static Ozone Test
A test piece described in JIS K6259 Section 4.4 was held at 40°C in an environment of an ozone concentration of 50 pphm extended 40% and evaluated for the presence of any cracks for 48 hours after the start of holding. "NC" indicates no cracks occurred, while "C-3", "C-2", etc. indicate the state of occurrence of cracks. The number of cracks of "C" is larger than "A". The size of the cracks of "-3" is larger than "-2".

(4) Interlayer Bonding Strength
The interlayer bonding strength of the rubber laminate was measured by a peeling test conducted at a tensile speed of 50 mm/min based on JIS K6301 to measure the interlayer bonding strength.

### Reference Example 1 (Example of Production of Nitrile Copolymer Rubber "a")

A reactor equipped with a thermometer and stirrer was charged with ion exchanged water in 200 parts, sodium dodecyl benzene sulfonate in 0.25 part, acrylonitrile in 36 parts, mono n-butyl maleate in 3 parts, and a molecular weight adjuster comprised of t-dodecyl mercaptan in 0.5 part in that order. Next, the air was evacuated by reduced pressure and nitrogen was substituted. This was repeated a total of three times to sufficiently remove the oxygen, then butadiene in 61 parts was charged. The reactor was held at 5°C, the cumene hydroperoxide (polymerization initiator) in 0.1 part and ferrous sulfate in 0.01 part were charged, and the mixture was stirred for 16 hours for emulsion polymerization.
When the polymerization conversion rate reached 85%, a polymerization terminator of a 10% hydroquinone aqueous solution in 0.1 part was added to stop the polymerization reaction, then a rotary evaporator was used to remove the residual monomers at a water temperature of 60°C and thereby obtain an emulsion of an acrylonitrile-butadiene-mono n-butyl maleate copolymer (solid concentration about 30 wt%). The obtained emulsion was poured into a calcium chloride aqueous solution to obtain an aqueous dispersion of polymer crumbs, then this aqueous dispersion was filtered by a wire net and further mixed with water and filtered. This washing operation was performed a total of two times, then the result was dried to obtain a nitrile copolymer rubber "a".
The nitrile copolymer rubber "a" was comprised of 35% of acrylonitrile units, 62.4% of butadiene units, and 2.6% of mono n-butyl maleate units. The carboxyl-group content per 100 g of the rubber was 0.015 equivalent, while the Mooney viscosity ML₁₊₄ (100°C) was 60.

### Reference Example 2 (Example of Production of Nitrile Copolymer Rubber "b")

The same procedure was performed as in Reference Example 1 for a polymerization reaction except for replacing in Reference Example 1 the charged mono n-butyl maleate in 3 parts to mono n-butyl itaconate so as to obtain a nitrile copolymer rubber "b".
The nitrile copolymer rubber "b" was comprised of 35% of acrylonitrile units, 62.4% of butadiene units, and 2.6% of mono n-butyl itaconate units, the carboxyl-group content per 100 g of the rubber was 0.015 equivalent, and the Mooney viscosity ML₁₊₄ (100°C) was 58.

### Reference Example 3 (Example of Production of Acryl-Based Polymer "p")

A reactor equipped with a thermometer and stirrer was charged with ion exchanged water in 150 parts, sodium octyl sulfate in 2 parts, ammonium persulfate (polymerization initiator) in 0.3 part, ethyl acrylate in 93.5 parts, acrylonitrile in 5 parts, mono n-butyl maleate in 1.5 part, and t-dodecyl mercaptan (molecular weight adjuster) in 0.01 part. While stirring, emulsion polymerization was performed at a temperature of 80°C for 5 hours, then the reaction was stopped to obtain an emulsion. The emulsion had a solid concentration of 39% and a polymerization conversion rate of 98%. This emulsion was mixed with a calcium chloride aqueous solution and solidified to obtain an aqueous dispersion of an acryl-based polymer. This aqueous dispersion was filtered by a wire net and further mixed with water and filtered. This washing operation was performed a total of two times, then the result was dried to obtain rubber of the acryl-based polymer "p".

The acryl-based polymer "p" was comprised of 93.7% of ethyl acrylate units, 5% of acrylonitrile units, and 1.3% of mono n-butyl maleate units. The carboxyl-group content per 100 g of the polymer was 0.007 equivalent, while the Mooney viscosity ML₁₊₄ (100) was 50.

### Reference Example 4 (Example of Production of Acryl-Based Polymer "q")

The same procedure was followed as in Reference Example 3 so as to perform a polymerization reaction except for changing the 93.5 parts of the charged ethyl acrylate in Reference Example 3 to 98.5 parts and changing the 5 parts of acrylonitrile and 1.5 parts of mono n-butyl maleate to 1.5 parts of glycidyl methacrylate to thereby obtain an acryl-based polymer "q".

The acryl-based polymer q was comprised of 98.5% of ethyl acrylate units and 1.5% of glycidyl methacrylate units. The epoxy group content per 100 g of the rubber was 0.01 equivalents, while the Mooney viscosity NL₁+₄ (100) was 39.

### Example 1

A nitrile copolymer rubber "a" in 60 parts, acryl-based polymer "p" in 40 parts, carbon black (Seast 116, made by Tokai Carbon) in 50 parts, stearic acid (made by Asahi Denka(ADEKA); lubricant) in 1 part, dibutyl diglycol adipate (RS-107, made by Asahi Denka(ADEKA); plasticizer) in 5 parts, and 4,4'-bis(α,α-dimethylbenzyl)diphenylamine (Nocrac CD, made by Ouchi Shinko Chemical Industrial; antiaging agent) in 1 part were charged into a Bambury mixer and kneaded at 50°C. After this, hexamethylene diamine carbamate (Diak #1, made by Dupont Dow Elastomer; cross-linking agent) in 0.8 part, di-o-tolyl guanidine (Noccelar DT, made by Ouchi Shinko Chemical Industrial; cross-linking accelerator) in 4 parts, and a phosphonium salt comprised of tetrabutyl phosphonium benzotriazolate in 3 parts were added and the mixture kneaded by an open roll at 50°C to obtain an uncross-linked mixed rubber sheet-shaped object with a thickness of 2 mm. Next, this sheet-shaped object was overlaid with a resin "m" (Dyneon THV 220G, made by Sumitomo 3M; fluororesin, melt flow index 10 g/10 min, thickness 50 µm) and pressed at 1 MPa and 160°C for 15 minutes for cross-linking and bonding to obtain a rubber laminate.
The obtained rubber laminate was tested for tensile strength, elongation, hardness, compression set, static ozone test, and interlayer bonding strength. The results are shown in Table 1. Note that at the time of the interlayer bonding strength test, the locations gripped by the chucks had cellophane sheets inserted into them in advance to prevent the two sheets from bonding.

### Example 2

In Example 1, the nitrile copolymer rubber "a" was replaced with the nitrile copolymer rubber "b", the cross-linking agent was changed from hexamethylene diamine carbamate in 0.8 part to adipic acid dihydrazide (ADH, made by Nippon Hydrazine Kogyo) in 0.7 part, and the 4 parts of the cross-linking accelerator comprised of di-o-tolyl guanidine were reduced to 3 parts to prepare a mixed rubber sheet-shaped object of a thickness of 2 mm.
On the other hand, a rubber "n" [Technoflon FOR TF50A, made by Ausimont, vinylidene fluoride-tetrafluoroethylene-hexafluoropropylene ternary copolymer rubber, ML₁₊₁₀ (121°C) 26] in 100 parts, magnesium oxide in 3 parts, calcium hydroxide in 6 parts, and carbon black (Thermax MT, made by Cancarb) in 20 parts were kneaded by an open roll while water cooling to prepare an uncross-linked fluorine rubber sheet-shaped object of a thickness of 2 mm.
The above two types of rubber sheet-shaped objects were overlaid and pressed at 1 MPa and 160°C for 15 minutes to cross-link and bond them and obtain a rubber laminate.
The obtained rubber laminate was tested in the same way as in Example 1. The results are shown in Table 1.

### Comparative Example 1

The same procedure was performed as in Example 1 to obtain a rubber laminate except for changing in Example 1 the nitrile copolymer rubber "a" to an acrylonitrile-butadiene binary copolymer rubber [Nipol 1042, made by Zeon Corporation, acrylonitrile units 33%, Mooney viscosity ML₁₊₄ (100°C) 77.5] to produce a mixed rubber sheet-shaped object.
The obtained rubber laminate was tested in the same way as in Example 1. The results are shown in Table 1.

### Comparative Example 2

The same procedure was performed as in Example 1 to obtain a rubber laminate except for changing in Example 1 the acryl-based polymer "p" to the acryl-based polymer "q" to prepare a mixed rubber sheet-shaped object.
The obtained rubber laminate was tested in the same way as in Example 1. The results are shown in Table 1.

### Comparative Example 3

The same procedure was performed as in Example 1 to obtain a rubber laminate except for changing in Example 1 the phosphonium salt comprised of tetrabutyl phosphonium benzotriazolate in 3 parts to 1,8-diazabicyclo(5.4.0) undecene-7 salt in 2 parts and changing the cross-linking agent comprised of hexamethylene diamine carbamate in 0.8 part and the cross-linking accelerator comprised of di-o-tolyl guanidine in 4 parts to zinc oxide (Zinc White No. 2, made by Seido Chemical) in 3 parts to prepare a mixed rubber sheet-shaped object.
The obtained rubber laminate was tested in the same way as in Example 1. The results are shown in Table 1.

[Table 1]

**Table 1**

| | | | | | Examples | | Comparative examples | | |
|---|---|---|---|---|---|---|---|---|---|
| | | | | | 1 | 2 | 1 | 2 | 3 |
| Test sample | Mixed crosslinked rubber layer | Nitrile copolymer rubber (A) | Type of nitrile copolymer rubber | | a | b | Nipol 1042 | a | a |
| | | | Carboxyl-group content | (equivalents/100 g) | 0.015 | 0.015 | 0 | 0.015 | 0.015 |
| | | | Amount of nitrile copolymer rubber | (parts) | 60 | 60 | 60 | 60 | 60 |
| | | Acryl-based polymer (B) | Type of acryl-based polymer | | p | p | p | q | p |
| | | | Carboxyl-group content | (equivalents/100 g) | 0.007 | 0.007 | 0.007 | 0 | 0.007 |
| | | | Amount of acryl-based polymer | (parts) | 40 | 40 | 40 | 40 | 40 |
| | | Phosphonium salts | Amount | (parts) | 3 | 3 | 3 | 3 | 0 |
| | | Cross-linking agent (C) | Name of compound | | HMDAC | ADH | HMDAC | HMDAC | zinc oxide |
| | | | Amount | (parts) | 0.8 | 0.7 | 0.8 | 0.8 | 3 |
| | Fluorinebased polymer layer | Type of fluorine-based polymer | | | resin m | rubber n | resin m | resin m | resin m |
| Test results | | Tensile strength | | (MPa) | 15.8 | 16.3 | 4.9 | 10.5 | 13.2 |
| | | Elongation | | (%) | 360 | 400 | 800 | 350 | 360 |
| | | Hardness | | (Duro A) | 68 | 68 | 63 | 67 | 73 |
| | | set Compression set | | (%) | 45 | 39 | 88 | 49 | 79 |
| | | Static ozone test | | | NC | NC | NC | C-3 | C-2 |
| | | Interlayer bonding strength | | (kN/mm) | 1.2 | 2.4 | 0.1 | 0.1 | 0.3 |

| | | | | | | | | | |
|---|---|---|---|---|---|---|---|---|---|
| Notes: HMDAC indicates hexamethylene diamine carbamate. ADH indicates adipic acid dihydrazide. | | | | | | | | | |

As shown in Table 1, according to the rubber laminate of the present invention, rubber laminates excellent in tensile strength, low compression set, and other mechanical characteristics, ozone resistance, and interlayer bonding strength are obtained (Examples 1 and 2).
On the other hand, in the configuration of the rubber laminate of the present invention, if using a cross-linked rubber layer with a nitrile copolymer rubber not containing carboxyl groups, the obtained rubber laminate remarkably drops in tensile strength and interlayer bonding strength (Comparative Example 1).
If using a cross-linked rubber layer with an acryl-based polymer not containing carboxyl groups, the obtained rubber laminate remarkably drops in ozone resistance and interlayer bonding strength (Comparative Example 2).
Further, a laminate of a cross-linked rubber layer obtained by changing the phosphonium salt to 1,8-diazabicyclo(5.4.0)undecene-7 salt and a fluorine-based polymer layer was low in ozone resistance and interlayer bonding strength (Comparative Example 3).

## Claims

1. A rubber laminate comprised of a cross-linked rubber layer containing a carboxyl-group containing nitrile copolymer rubber (A), a carboxyl-group containing acryl-based polymer (B), and a phosphonium salt shown by the following general formula (1) and a fluorine-based polymer layer. 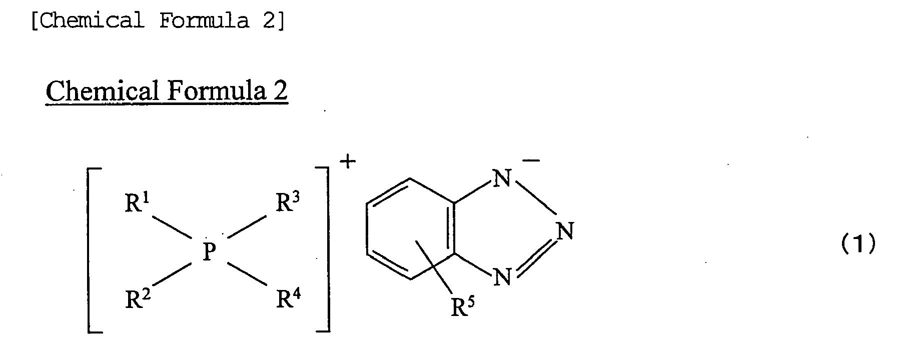 (where R¹, R², R³, and R⁴ are C₁ to C₂₀ hydrocarbon residues which may contain substituent groups. However, up to three of R¹, R², R³, and R⁴ may be primary to tertiary amino groups or fluoroalkyl groups. R⁵ is hydrogen or a C₁ to C₂₀ alkyl group)

2. The rubber laminate as set forth in claim 1, wherein the carboxyl-group content per 100 grams of said carboxyl-group containing nitrile copolymer rubber (A) ingredient is 2×10⁻³ to 1×10⁻¹ equivalents and the carboxyl-group content per 100 grams of said carboxyl-group containing acryl-based polymer (B) ingredient is 4×10⁻⁴ to 1×10⁻¹ equivalents.

3. The rubber laminate as set forth in claim 1 or 2, wherein said carboxyl-group containing nitrile copolymer rubber (A) ingredient and said carboxyl-group containing acryl-based polymer (B) ingredient are in a weight ratio of (A) ingredient: (B) ingredient=40:60 to 90:10.

4. The rubber laminate as set forth in any one of claims 1 to 3, wherein said phosphonium salt content in the cross-linked rubber layer is 0.5 to 10 parts by weight per 100 parts by weight of the total of said carboxyl-group containing nitrile copolymer rubber (A) ingredient and said carboxyl-group containing acryl-based polymer (B) ingredient.

5. The rubber laminate as set forth in any one of claims 1 to 4, wherein said phosphonium salt is also contained in the fluorine-based polymer layer.

6. The rubber laminate as set forth in any one of claims 1 to 5, wherein said fluorine-based polymer layer is comprised of a polymer containing fluorine-containing unsaturated monomer units in an amount of 62 wt% or more and said polymer is comprised of a fluorine rubber having a Mooney viscosity ML₁₊₁₀ (121°C) of 1 to 150.

7. The rubber laminate as set forth in any one of claims 1 to 5, wherein said fluorine-based polymer layer is comprised of a polymer containing fluorine-containing unsaturated monomer units in an amount of 62 wt% or more and said polymer is comprised of a fluororesin having a melt flow index at 265°C and a load of 5 kg based on JIS K 7210 of 5 to 60 g/10 min.
